# EUROPÄISCHE PATENTANMELDUNG

(11) **EP 1 439 056 A1**
(43) Veröffentlichungstag der Anmeldung: **21.07.2004**
(21) Anmeldenummer: 03018628.2
(22) Anmeldetag: 20.08.2003
(51) Int. Cl.: B32B 27/06, B32B 27/32, B32B 27/36, B32B 7/06

(54) **Laminat aus zwei Folienmaterialien mit unterschiedlichen Reissfestigkeiten, insbesondere aus Polyester und Polyethylen**

(30) Priorität: 14.01.2003 US 341915
(71) Anmelder: Nordenia Deutschland Gronau GmbH, 48599 Gronau (DE)
(72) Erfinder: Winkler, Michael E., Cape Girardeau, MO 63701-1605 (US)
(74) Vertreter: Albrecht, Rainer Harald, Dr.-Ing.

(57) **Zusammenfassung**

Gegenstand der Erfindung ist ein Laminatmaterial aus zwei Folienmaterialien mit unterschiedlichen Reißfestigkeiten, insbesondere aus Polyester und Polyethylen. Erfindungsgemäß ist der aus einem Folienmaterial hoher Reißfestigkeit bestehende Teil des Laminats mehrschichtig ausgebildet und weist mindestens zwei aus diesem Material hoher Reißfestigkeit bestehende Schichten auf, die durch eine Klebstoffschicht geringer Scherfestigkeit verbunden ist. Die erfindungsgemäße Ausbildung führt zu einer Verbesserung der Reißfestigkeit des Laminats.

## Beschreibung

Die Erfindung betrifft ein Laminat aus zwei Folienmaterialien mit unterschiedlichen Reißfestigkeiten, insbesondere aus Polyester und Polyethylen.

Laminate aus einer Polyester- (PET) und einer Polyethylen- (PE) Schicht weisen eine unzureichende Reißfestigkeit auf. Die Reißfestigkeit des Materialverbundes ist wesentlich kleiner als die Reißfestigkeit des Polyethylens, und zwar auch dann, wenn die Dicke der Polyethylenschicht deutlich größer ist als die Dicke der Polyesterschicht. Die Reißfestigkeit des Verbundmaterials wird geprägt durch die geringen Reißfestigkeitswerte des Polyesters. Ein entsprechendes Verhalten zeigen auch Laminate aus anderen Folienmaterialien, die sich in Bezug auf die Reißfestigkeitswerte stark unterscheiden, z. B. bei Laminaten aus orientiertem Polypropylen (OPP) und Polyethylen (PE).

Der Erfindung liegt die Aufgabe zugrunde, die Reißfestigkeit eines Laminates aus Materialien, deren Reißfestigkeiten sehr unterschiedlich sind, zu verbessern.

Die Aufgabe wird erfindungsgemäß dadurch gelöst, dass der aus einem Folienmaterial hoher Reißfestigkeit bestehende Teil des Laminats mehrschichtig ausgebildet ist und mindestens zwei aus diesem Material hoher Reißfestigkeit bestehende Schichten aufweist, die durch eine Klebstoffschicht geringer Scherfestigkeit verbunden sind. Die Scherfestigkeit ist so eingerichtet, dass die Schichten voneinander abziehbar sind bzw. abgeschält werden können. Vorzugsweise ist die Klebstoffschicht so ausgebildet, dass die Schichten mit einer Schälkraft zwischen 3,9 N/m und 118 N/m voneinander getrennt werden können. Durch den erfindungsgemäßen Schichtenaufbau kann die Reißfestigkeit des Laminats um ein Mehrfaches verbessert werden. Offenbar bewirkt die mehrschichtige Anordnung des aus einem Material hoher Reißfestigkeit bestehenden Teils des Laminats unter Verwendung zäher Klebstoffschichten, welche die Schichten nicht elastisch verbinden, dass die Kraft mit einer günstigeren Verteilung in den Laminatquerschnitt eingeleitet wird.

Zweckmäßig ist der aus einem Folienmaterial hoher Reißfestigkeit bestehende Teil des Laminats mit der aus dem anderen Folienmaterial (welches eine vergleichsweise kleine Reißfestigkeit aufweist) bestehenden Schicht ebenfalls durch eine Klebstoffschicht geringer Scherfestigkeit verbunden.

Die Erfindung eignet sich insbesondere für Laminate aus Polyester (PET) und Polyethylen (PE). Dies wird im Folgenden anhand eines Ausführungsbeispiels erläutert.

Es wurde ein Laminat aus Polyester (PET) und einer Polyethylenfolie (PE) hergestellt. Für die reinen Materialien wurden nach Elmendorf folgende Reißfestigkeitswerte gemessen:

| | | |
|---|---|---|
| Polyester PET, Foliendicke | MD | 6.87 N/mm |
| 12 µm | CD | 6.87 N/mm |
| Polyethylen PE, Foliendicke | MD | 784,8 N/mm |
| 140 µm | CD | 1177.2 N/mm |

Das aus der einschichtigen Polyethylenfolie und der Polyesterschicht hergestellte Laminat besaß eine Reißfestigkeit von 11,77 N/mm in Maschinenrichtung (MD) und eine Reißfestigkeit von 19,6 N/mm in Querrichtung (CD), jeweils gemessen nach Elmendorf. Erfindungsgemäß wurde anschließend ein Laminat aus dem 12 µm dicken Polyestermaterial PET und der 140 µm dicken Polyethylen-Folie mit einer Schicht der Stärke von insgesamt 152 µm hergestellt, wobei der aus PE bestehende Teil des Laminats zweischichtig ausgebildet wurde. Die beiden PE-Schichten wurden durch eine Klebstoffschicht geringer Scherfestigkeit verbunden. Das erfindungsgemäß hergestellte Laminat wies eine nach Elmendorf ermittelte Reißfestigkeit von 34,3 N/mm in Maschinenrichtung (MD) und eine Reißfestigkeit von 58,9 N/mm in Querrichtung (CD) auf. Die Reißfestigkeitswerte konnten um das Dreifache verbessert werden.

## Patentansprüche

1. Laminat aus zwei Folienmaterialien mit unterschiedlichen Reißfestigkeiten, insbesondere aus Polyester und Polyethylen, wobei der aus einem Folienmaterial hoher Reißfestigkeit bestehende Teil des Laminats mehrschichtig ausgebildet ist und mindestens zwei aus diesem Material hoher Reißfestigkeit bestehende Schichten aufweist, die durch eine Klebstoffschicht geringer Scherfestigkeit verbunden sind.

2. Laminat nach Anspruch 1, **dadurch gekennzeichnet, dass** der aus einem Folienmaterial hoher Reißfestigkeit bestehende Teil des Laminats mit der aus dem anderen Folienmaterial, welche eine vergleichsweise kleine Reißfestigkeit aufweist, ebenfalls durch eine Klebstoffschicht geringer Scherfestigkeit verbunden ist.

3. Laminat nach Anspruch 1 oder 2, **dadurch gekennzeichnet, dass** die Klebstoffschicht so ausgebildet ist, dass die durch die Klebstoffschicht verbundenen Schichten mit einer Schälkraft zwischen 3,9 N/m und 118 N/m voneinander getrennt werden können.
